# EUROPEAN PATENT APPLICATION

(11) **EP 4 588 702 A1**
(43) Date of publication of application: **23.07.2025**
(21) Application number: 24221441.9
(22) Date of filing: 19.12.2024
(51) Int. Cl.: B60K 6/387, B60K 6/40, B60K 6/547, B60W 10/02, B60W 10/06, B60W 10/08, B60W 20/40, B60W 30/192, B60K 6/48, B60W 30/20

(54) **VEHICLE AND METHOD OF CONTROLLING VEHICLE**

(30) Priority: 18.01.2024 JP 2024006360
(71) Applicant: Kawasaki Motors, Ltd., Akashi, Hyogo 673-8666 (JP)
(72) Inventor: Terai, Shohei, Akashi-shi, Hyogo, 673-8666 (JP); Sano, Katsuya, Akashi-shi, Hyogo, 673-8666 (JP); Takagi, Katsuya, Kobe-shi, Hyogo, 650-8670 (JP)
(74) Representative: Witte, Weller & Partner Patentanwälte mbB

(57) **Abstract**

A vehicle (1) according to one aspect includes: an internal combustion engine (2) that is a traveling driving source; a driving wheel (9); a main clutch (21) including a first rotating body (21a) located closer to the internal combustion engine (2) and a second rotating body (21b) located closer to the driving wheel (9); a clutch actuator (22) that operates the main clutch (21); and processing circuitry configured to in a state where the vehicle (1) is traveling with the main clutch (21) in a disengaged state, determine whether or not a predetermined combustion required condition is satisfied, the predetermined combustion required condition being a condition regarding a requirement of a start of combustion of the internal combustion engine (2), when the processing circuitry determines that the combustion required condition is satisfied, execute clutch control of controlling the clutch actuator (22) such that the main clutch (21) changes from the disengaged state to an engaged state, after the clutch control is started, determine whether or not a predetermined combustion permission condition is satisfied, the predetermined combustion permission condition being a condition regarding permission of the combustion of the internal combustion engine (2), and when the processing circuitry determines that the combustion permission condition is satisfied, execute combustion start control of starting the combustion of the internal combustion engine (2).

## Description

### CROSS-REFERENCE TO RELATED APPLICATIONS

This application claims priority to and the benefit of Japanese Patent Application No. 2024-6360 filed on January 18, 2024, the entire disclosure of which is incorporated herein by reference.

### BACKGROUND OF THE INVENTION

### FIELD OF THE INVENTION

The present invention relates to a vehicle and a method of controlling a vehicle.

### DESCRIPTION OF THE RELATED ART

According to a hybrid vehicle described in Japanese Laid-Open Patent Application Publication No. 2021-95015, an engine is rotated by utilizing the rotation of a transmission shaft during traveling. Next, when it is determined that the engine is combusting, the vehicle controls a clutch such that driving power of the engine is not transmitted to the transmission shaft.

According to the vehicle described in Japanese Laid-Open Patent Application Publication No. 2021-95015, power starts being transmitted from the transmission shaft to the engine, and at the same time, the combustion of the engine starts. Therefore, a combustion start timing of the engine is unstable, and torque fluctuation caused by the start of the combustion of the engine is easily transmitted to the transmission shaft. The traveling feeling of a rider is deteriorated by the torque fluctuation.

### SUMMARY OF THE INVENTION

A vehicle according to one aspect of the present invention includes: an internal combustion engine that is a traveling driving source; a driving wheel; a main clutch that includes a first rotating body and a second rotating body and is switchable between an engaged state and a disengaged state, the first rotating body being located at a power transmitting path, which extends between the internal combustion engine and the driving wheel, so as to be closer to the internal combustion engine, the second rotating body being located at the power transmitting path so as to be closer to the driving wheel; a clutch actuator that operates the main clutch; and processing circuitry configured to in a state where the vehicle is traveling with the main clutch in the disengaged state, determine whether or not a predetermined combustion required condition is satisfied, the predetermined combustion required condition being a condition regarding a requirement of a start of combustion of the internal combustion engine, when the processing circuitry determines that the combustion required condition is satisfied, execute clutch control of controlling the clutch actuator such that the main clutch changes from the disengaged state to the engaged state, after the clutch control is started, determine whether or not a predetermined combustion permission condition is satisfied, the predetermined combustion permission condition being a condition regarding permission of the combustion of the internal combustion engine, and when the processing circuitry determines that the combustion permission condition is satisfied, execute combustion start control of starting the combustion of the internal combustion engine.

A method of controlling a vehicle according to one aspect of the present invention is a method of controlling a vehicle, the vehicle including: an internal combustion engine that is a traveling driving source; a driving wheel; a main clutch that includes a first rotating body and a second rotating body and is switchable between an engaged state and a disengaged state, the first rotating body being located at a power transmitting path, which extends between the internal combustion engine and the driving wheel, so as to be closer to the internal combustion engine, the second rotating body being located at the power transmitting path so as to be closer to the driving wheel; and a torque reducer that reduces torque to be transmitted to the driving wheel, the method including: in a state where the vehicle is traveling with the main clutch in the disengaged state, determining whether or not a predetermined combustion required condition is satisfied, the predetermined combustion required condition being a condition regarding a requirement of a start of combustion of the internal combustion engine; when it is determined that the combustion required condition is satisfied, changing the main clutch from the disengaged state to the engaged state; after the main clutch starts changing from the disengaged state to the engaged state, determining whether or not a predetermined combustion permission condition is satisfied, the predetermined combustion permission condition being a condition regarding permission of the combustion of the internal combustion engine; and when it is determined that the combustion permission condition is satisfied, starting the combustion of the internal combustion engine and controlling the torque reducer such that the torque to be transmitted to the driving wheel is reduced.

The above object, other objects, features, and advantages of the present invention will be made clear by the following detailed explanation of preferred embodiments with reference to the attached drawings.

### BRIEF DESCRIPTION OF THE DRAWINGS

FIG. 1 is a schematic diagram of a vehicle according to one embodiment.
FIG. 2 is a block diagram showing a controller and its inputs and outputs.
FIG. 3 is a flowchart showing the flow of processing of switching control from an EV mode to a HEV mode.
FIG. 4 is a graph showing time changes of respective values in the switching control shown in FIG. 3.

### DETAILED DESCRIPTION

Hereinafter, an embodiment will be described with reference to the drawings.

### Configuration of Vehicle

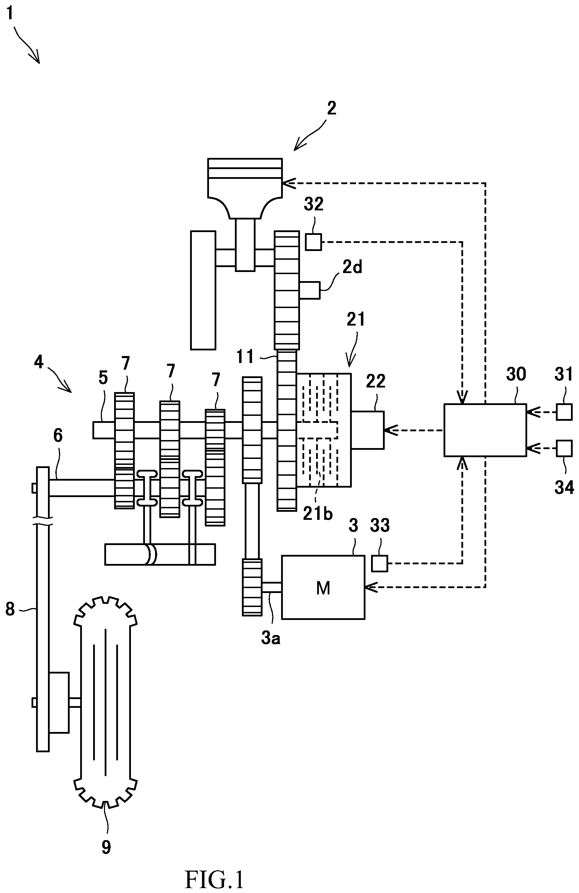

FIG. 1 is a schematic diagram of a vehicle 1 according to one embodiment. In the present embodiment, the vehicle 1 is a straddled vehicle including a rear wheel as a driving wheel 9 and a front wheel as a driven wheel. Examples of the straddled vehicle include a motorcycle and an automatic three-wheeled vehicle.

The vehicle 1 described in the present embodiment is a hybrid vehicle. The vehicle 1 includes an internal combustion engine (hereinafter may be simply referred to as an "engine") 2 and an electric motor 3 as two traveling driving sources that generate torque for driving the driving wheel 9. The electric motor 3 can rotate in a forward direction and a reverse direction. Moreover, the vehicle 1 further includes a transmission 4, a main clutch (hereinafter may be simply referred to as a "clutch") 21, a clutch actuator 22, and a controller 30.

The transmission 4 changes the speed of rotational power output from the traveling driving sources. In the present embodiment, the transmission 4 is a dog clutch gear transmission. The transmission 4 includes an input shaft 5, an output shaft 6, and transmission gear pairs 7 having respective change gear ratios different from each other. The input shaft 5 and the output shaft 6 are parallel to each other. Power is input from the engine 2 and the electric motor 3 to the input shaft 5. The output shaft 6 transmits the power to the driving wheel 9 through an output transmitting structure 8. Examples of the output transmitting structure 8 include a drive chain, a drive belt, and a drive shaft.

The vehicle 1 includes at least one operation element that receives an operation performed by a rider. The at least one operation element is an accelerator operation element, a brake operating element, a boost operation element, a speed change operation element, a mode switching operation element, or any combination thereof. For example, the accelerator operation element may be a throttle grip located at a handlebar. For example, the brake operating element may be a brake lever located at the handlebar. For example, the speed change operation element may be a shift pedal operated by a foot of the rider or may be a lever or a switch located at the handlebar. For example, each of the boost operation element and the mode switching operation element maybe a switch located at the handlebar. The operations of the rider with respect to these operation elements are detected by a below-described operation sensor 31.

In the transmission 4, one of the transmission gear pairs 7 is selected in mechanical association with the operation of the rider with respect to the speed change operation element. The transmission gear pair corresponding to one gear stage selected from gear stages transmits the power from the input shaft 5 to the output shaft 6. The transmission 4 may perform gear change in electrical association with a speed change operation of the rider with respect to the speed change operation element. The transmission 4 does not have to be a dog clutch transmission and may be, for example, a continuously variable transmission.

The main clutch 21 is located at an engine power transmitting path (hereinafter simply referred to as a "power transmitting path") that is a path through which engine power is transmitted from the engine 2 to the driving wheel 9. Specifically, the main clutch 21 is located at the power transmitting path so as to exist between the engine 2 and the input shaft 5 of the transmission 4.

The main clutch 21 is a friction clutch. For example, the main clutch 21 is a single disc clutch or a multiple disc clutch. The main clutch 21 includes a pair of rotating bodies 21a and 21b that can contact each other and separate from each other. Regarding the pair of rotating bodies 21a and 21b, a rotating body located at the power transmitting path and closer to the engine 2 is referred to as a first rotating body 21a, and a rotating body located at the power transmitting path and closer to the driving wheel 9 is referred to as a second rotating body 21b.

A primary gear 11 to which the power of the engine 2 is transmitted is located around an axis of the input shaft 5 so as to be rotatable relative to the input shaft 5. The primary gear 11 and the first rotating body 21a are connected to each other so as to rotate together. Moreover, the second rotating body 21b and the input shaft 5 are connected to each other so as to rotate together. For example, the first rotating body 21a is a friction plate, and the second rotating body 21b is a clutch plate. The main clutch 21 transmits the rotational power from one of the pair of rotating bodies 21a and 21b to the other by frictional force generated between the pair of rotating bodies 21a and 21b.

The main clutch 21 is operated by the clutch actuator 22. The clutch actuator 22 operates the main clutch 21 to change engagement pressure of the main clutch 21. The engagement pressure of the main clutch 21 denotes pressure by which one of the pair of rotating bodies 21a and 21b is pressed against the other. As the engagement pressure of the main clutch 21 increases, transmission torque that can be transmitted by the main clutch 21 increases, i.e., friction torque increases. To be specific, the clutch actuator 22 changes the transmission torque that can be transmitted by the main clutch 21.

The main clutch 21 becomes a disengaged state, an engaged state, or a half-engaged state in accordance with the engagement pressure of the main clutch 21. The disengaged state of the main clutch 21 is a state where the pair of rotating bodies 21a and 21b separate from each other and is a state where even when one of the rotating bodies rotates, the power is prevented from being transmitted to the other rotating body. To be specific, the disengaged state is a state where the power is not transmitted between the engine 2 and the input shaft 5.

The engaged state of the main clutch 21 is a state where one of the pair of rotating bodies 21a and 21b is adequately pressed against the other at a predetermined maximum engagement pressure. Moreover, the engaged state is a state where the rotational power is transmitted basically without a slip between the pair of rotating bodies 21a and 21b. To be specific, the engaged state is a state where 100% of the torque generated at or transmitted to one of the engine 2 and the input shaft 5 is transmitted to the other.

When the main clutch 21 changes from the disengaged state to the engaged state, the main clutch 21 changes through the half-engaged state. The half-engaged state of the main clutch 21 is a state where one of the pair of rotating bodies 21a and 21b is pressed against the other at less than the maximum engagement pressure.

Acceptable torque corresponding to the engagement pressure is set for the main clutch 21. The acceptable torque is maximum torque that can be transmitted from one of the pair of rotating bodies 21a and 21b to the other. As the engagement pressure decreases, the acceptable torque decreases. Since the engagement pressure in the half-engaged state is lower than the engagement pressure in the engaged state, the acceptable torque in the half-engaged state is lower than the acceptable torque in the engaged state. For example, when torque larger than the acceptable torque set in accordance with the engagement pressure is transmitted from one of the engine 2 and the input shaft 5 to the main clutch 21 that is in the half-engaged state, the main clutch 21 in the half-engaged state does not transmit this torque larger than the acceptable torque to the other of the engine 2 and the input shaft 5. Therefore, the torque that can be transmitted from one of the engine 2 and the input shaft 5 to the other through the main clutch 21 can be adjusted by adjusting the engagement pressure of the main clutch 21 in the half-engaged state. The torque that can be transmitted in the half-engaged state may be stepwisely adjustable or may be non-stepwisely adjustable.

In the present embodiment, the clutch actuator 22 is a hydraulic actuator. The clutch actuator 22 includes: a hydraulic chamber; a piston that is driven by hydraulic pressure of the hydraulic chamber; and a solenoid valve that adjusts the hydraulic pressure of the hydraulic chamber. The hydraulic pressure of the clutch 21 changes in accordance with the value of a current supplied to the solenoid valve. For example, when the hydraulic pressure is preset open corresponding pressure, the clutch 21 becomes the disengaged state. Moreover, when the hydraulic pressure is an engagement corresponding pressure or more, the clutch 21 becomes the engaged state. Furthermore, when the hydraulic pressure is between the open corresponding pressure and the engagement corresponding pressure, the clutch 21 becomes the half-engaged state in which the rotational power is transmitted, but the transmittable torque is limited. In the present embodiment, the clutch actuator 22 can variably set the hydraulic pressure of the hydraulic chamber in a stepwise manner or a continuous manner. Thus, the torque that can be transmitted from one of the engine 2 and the input shaft 5 to the other through the main clutch 21 can be set arbitrarily.

In the present embodiment, an output shaft 3a of the electric motor 3 rotates together with the second rotating body 21b of the main clutch 21. Specifically, the output shaft 3a of the electric motor 3 is connected to the input shaft 5 of the transmission 4 through, for example, a gear chain so as to rotate together with the input shaft 5 of the transmission 4. Moreover, as described above, the second rotating body 21b and the input shaft 5 are connected to each other so as to rotate together. Therefore, the rotational frequency of the output shaft 3a of the electric motor 3 and the rotational frequency of the input shaft 5 of the transmission 4 are proportional to each other.

Moreover, the output shaft 3a of the electric motor 3 is connected to the input shaft 5 of the transmission 4 without through the main clutch 21. Therefore, even when the main clutch 21 is in the disengaged state, the power can be transmitted from the electric motor 3 to the input shaft 5 regardless of whether or not the engine 2 is rotating. When the main clutch 21 is engaged, rotational torque of the engine 2 can be transmitted to the driving wheel 9, or the rotational torque of the driving wheel 9 can be transmitted to the engine 2. Moreover, as described above, the torque transmitted from one of the pair of rotating bodies 21a and 21b to the other can be changed by adjusting the engagement pressure of the main clutch 21.

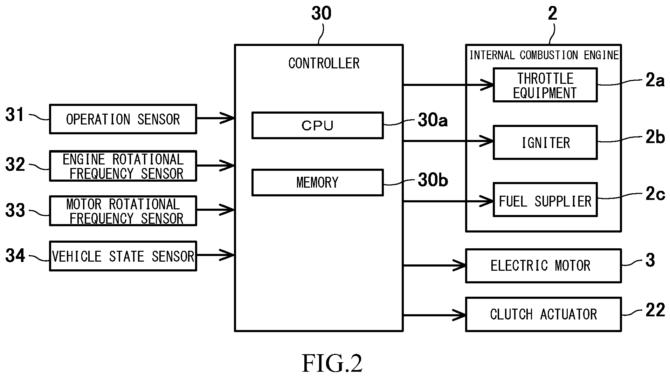

FIG. 2 is a block diagram showing the controller 30 and its inputs and outputs. At least one operation sensor 31, an engine rotational frequency sensor 32, a motor rotational frequency sensor 33, and at least one vehicle state sensor 34 are electrically connected to the controller 30. The controller 30 controls the engine 2, the electric motor 3, and the clutch actuator 22 based on information received from various sensors, such as the at least one operation sensor 31, the engine rotational frequency sensor 32, the motor rotational frequency sensor 33, and the at least one vehicle state sensor 34.

The at least one operation sensor 31 detects the operation of the rider with respect to the above-described operation element. For example, the at least one operation sensor 31 is an accelerator operation sensor that detects an angular displacement amount of the throttle grip as the accelerator operation element, a brake operation sensor that detects a brake operation with respect to the brake operating element, a boost operation sensor that detects a boost operation with respect to the boost operation element, a speed change operation sensor that detects a speed change operation with respect to the speed change operation element, a mode switching operation sensor that detects a mode switching operation with respect to the mode switching operation element, or any combination thereof.

The engine rotational frequency sensor 32 detects the rotational frequency of the engine 2, i.e., the rotational frequency of a crankshaft 2d (hereinafter may be referred to as an "engine rotational frequency"). The engine rotational frequency sensor 32 may detect a parameter value corresponding to the rotational frequency of the crankshaft 2d. To be specific, the engine rotational frequency sensor 32 may directly detect the rotation of the crankshaft 2d or may detect the rotation of another rotating body, such as the primary gear 11 or the first rotating body 21a, which rotates together with the crankshaft 2d.

The motor rotational frequency sensor 33 detects the rotational frequency of the output shaft 3a of the electric motor 3 (hereinafter may be referred to as a "motor rotational frequency"). The motor rotational frequency sensor 33 may be able to detect a parameter value corresponding to the rotational frequency of the output shaft 3a of the electric motor 3. To be specific, the motor rotational frequency sensor 33 may directly detect the rotation of the output shaft 3a of the electric motor 3 or may detect the rotation of another rotating body, such as the input shaft 5 or the second rotating body 21b, which rotates together with the output shaft 3a of the electric motor 3.

The at least one vehicle state sensor 34 detects a vehicle state. For example, the at least one vehicle state sensor 34 is a vehicle speed sensor that detects a vehicle speed, an acceleration sensor that detects an acceleration of a vehicle body in various directions (such as an upper-lower direction, a front-rear direction, and a left-right direction), a lean angle sensor that detects a lean angle, a steering sensor that detects a steering angle, a stroke sensor that detects a stroke amount of a suspension located between the wheel and the vehicle body, a vibration sensor that detects the number of vibrations of the vehicle body in the upper-lower direction, a clutch sensor that detects the engagement pressure of the main clutch 21 or a parameter value corresponding to the engagement pressure of the main clutch 21, an oil temperature sensor that detects an oil temperature of the clutch actuator 22, a temperature sensor that detects an air temperature around the vehicle body, a temperature sensor that detects a temperature of a battery that stores electric power to be supplied to the electric motor 3, a battery sensor that detects the state of charge (SOC) of the battery, or any combination thereof.

The engine 2 includes throttle equipment 2a, an igniter 2b, and a fuel supplier 2c. The throttle equipment 2a, the igniter 2b, and the fuel supplier 2c are controlled by the controller 30. The throttle equipment 2a adjusts an intake air amount of a cylinder of the engine 2. For example, the throttle equipment 2a is electronic control throttle equipment that makes a throttle valve perform opening and closing operations by a valve actuator, such as a motor. The igniter 2b ignites a fuel-air mixture in a combustion chamber of the engine 2. The igniter 2b is, for example, an ignition plug. The fuel supplier 2c adjusts the amount of fuel supplied to the combustion chamber of the engine 2. The fuel supplier 2c is, for example, an injector.

The controller 30 may be a single control unit or may be control units located distributedly. In terms of hardware, the controller 30 includes at least one CPU 30a, at least one memory 30b, an I/O interface, and the like. The at least one memory 30b includes a volatile memory and a non-volatile memory. A combination of the CPU 30a and the memory 30b is one example of processing circuitry.

The CPU 30a executes control, which corresponds to the state of the vehicle 1, with respect to the engine 2, the electric motor 3, and the clutch actuator 22. For example, the CPU 30a switches traveling modes of the vehicle 1. The traveling modes of the vehicle 1 include an EV mode and a HEV mode.

The EV mode is a traveling mode in which the driving wheel 9 is driven only by output torque of the electric motor 3. In the EV mode, the clutch 21 is in the disengaged state such that the engine 2 does not become resistance when the electric motor 3 drives. During the EV mode, the engine 2 is basically in a stop state.

The CPU 30a calculates rider required torque based on an accelerator operation amount of the rider. When the traveling mode is the EV mode, the CPU 30a controls the electric motor 3 such that the output torque of the electric motor 3 becomes the rider required torque.

The HEV mode is a traveling mode in which the driving wheel 9 is driven by at least the output torque of the engine 2. In the HEV mode, the clutch 21 is in the engaged state such that the rotational power of the engine 2 is transmitted to the driving wheel 9 through the transmission 4. In the HEV mode, the driving wheel 9 may be driven by both of the output torque of the electric motor 3 and the output torque of the engine 2 or may be driven only by the rotational power of the engine 2 without the driving of the electric motor 3.

For example, when the traveling mode is the HEV mode, the CPU 30a determines torque required of the engine 2 as the output torque (hereinafter referred to as "engine required torque") and torque required of the electric motor 3 as the output torque (hereinafter referred to as "motor required torque") such that the sum of the engine required torque and the motor required torque becomes the rider required torque. The CPU 30a controls the engine 2 such that the output torque of the engine 2 becomes the determined engine required torque and controls the electric motor 3 such that the output torque of the electric motor 3 becomes the determined motor required torque.

For example, a rotational direction of the electric motor 3 that generates the torque that accelerates the vehicle 1 forward is referred to as a positive direction, and its opposite direction is referred to as a negative direction. In this case, the motor required torque may be determined as the torque in the positive direction or may be determined as the torque in the negative direction. For example, in the HEV mode, to charge the battery, the electric motor 3 may be made to generate regenerative torque in the negative direction during the traveling of the vehicle.

Specifically, the HEV mode may take a control state that is a normal traveling state or an electric power generation traveling state. For example, in the normal traveling state, basically, the entire driving power necessary for the traveling is generated by the engine 2, and the electric motor 3 merely generates the torque so as to compensate for the lack of the output torque of the engine 2. On the other hand, in the electric power generation traveling state, the electric motor 3 is required to generate the torque in the negative direction, and the engine 2 is required to generate the rider required torque, and in addition, the torque that cancels the torque of the electric motor 3 in the negative direction. Thus, in the electric power generation traveling state, the vehicle 1 is made to travel while generating electric power by the electric motor 3.

In the present embodiment, the EV mode can be switched to the HEV mode while maintaining the traveling state of the vehicle 1. In this case, a transition mode is set as a traveling mode in a process in which the EV mode is switched to the HEV mode. During the EV mode, the engine 2 is in a combustion stop state, i.e., in a below-described combustion disabled state. Therefore, to start the combustion of the engine 2 in the middle of the transition from the EV mode to the HEV mode, the crankshaft 2d of the engine 2 needs to be rotated. In the present embodiment, the vehicle 1 does not include a starter motor dedicated for the engine start or an integrated starter generator (ISG) dedicated for the engine start and the electric power generation, and the crankshaft 2d of the engine 2 is rotated by the electric motor 3 that is the traveling driving source. In the present specification, the combustion of the engine 2 denotes a state where the crankshaft 2d is rotated by the engine 2 itself. Moreover, the combustion start of the engine 2 denotes that at least one of the supply of intake air, the injection of the fuel, or the ignition of the fuel-air mixture is started such that the crankshaft 2d is rotated by the engine 2 itself.

### Switching from EV mode to HEV mode

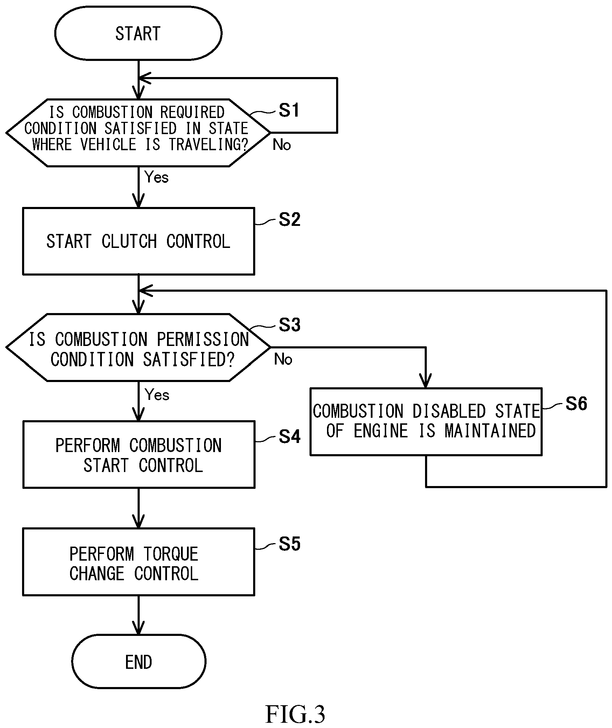

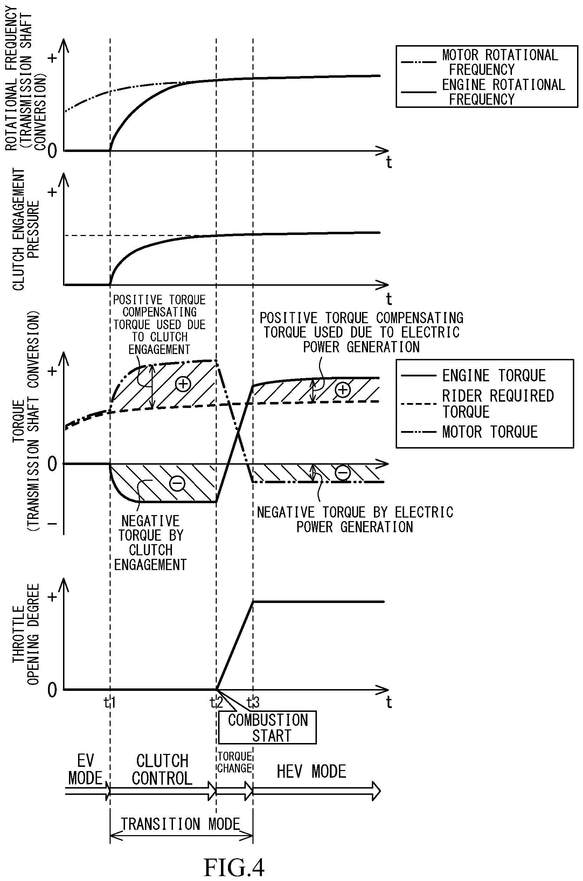

The following will describe the flow of processing when the traveling mode is switched from the EV mode to the HEV mode while maintaining the traveling of the vehicle 1. In other words, the flow of the processing when the engine combustion stop state is switched to the engine combustion state during the traveling will be described. FIG. 3 is a flowchart showing the flow of the processing of the switching control from the EV mode to the HEV mode in the present embodiment. FIG. 4 is a graph showing time changes of respective values in the switching control shown in FIG. 3.

FIG. 4 shows a graph showing the rotational frequency of the engine 2 and the rotational frequency of the electric motor 3, a graph showing the engagement pressure of the main clutch 21, a graph showing various types of torque, and a graph showing a throttle opening degree in this order from an upper side. The uppermost graph of FIG. 4 shows the motor rotational frequency and the engine rotational frequency. The second graph from the bottom in FIG. 4 shows the engine torque as the output torque of the engine 2, the motor torque as the output torque of the electric motor 3, and the rider required torque. Each of the rotational frequencies and the torque is shown as a conversion value at the input shaft 5 (transmission shaft) of the transmission 4.

As shown in FIG. 4, while the vehicle 1 is traveling in the EV mode, the clutch 21 is in the disengaged state, and the driving wheel 9 is driven by the output torque of the electric motor 3. The CPU 30a controls the electric motor 3 such that the output torque of the electric motor 3 becomes the rider required torque.

As shown in FIG. 3, the CPU 30a determines whether or not a predetermined combustion required condition is satisfied in a state where the vehicle 1 is traveling with the main clutch 21 in the disengaged state (Step S1). The combustion required condition is a condition regarding the requirement of the start of the combustion of the engine 2 and is a start condition of below-described clutch control.

In the present embodiment, the combustion required condition is a mode switching condition regarding mode switching from the EV mode to the HEV mode. To be specific, while the vehicle 1 is traveling in the EV mode, the CPU 30a determines whether or not the mode switching condition as one example of the combustion required condition is satisfied. The mode switching condition may be satisfied by the mode switching operation of the rider or may be satisfied without the mode switching operation of the rider. For example, when the CPU 30a determines that the mode switching operation of the rider from the EV mode to the HEV mode has been detected by the mode switching operation sensor, the CPU 30a may determine that the mode switching condition has been satisfied.

For example, when the CPU 30a recognizes a current traveling state of the vehicle 1 based on the information received from various sensors (for example, the vehicle state sensor 34) of the vehicle 1 and determines that the HEV mode is an optimal traveling mode, the CPU 30a may determine that the mode switching condition from the EV mode to the HEV mode has been satisfied. In this case, the mode switching condition may be, for example, a condition indicating that it is difficult to continue the EV mode. For example, the mode switching condition may be a condition that the SOC detected by the battery sensor, i.e., a battery remaining amount is a predetermined value or less. For example, the mode switching condition may be a condition that the boost operation sensor has detected the boost operation of the rider, in other words, a condition that a requirement of accelerating the vehicle 1 by both of the engine 2 and the electric motor 3 is generated. For example, the mode switching condition may be a condition that the temperature detected by the temperature sensor that detects the temperature of the battery is a predetermined value or more.

In addition to the mode switching condition, the combustion required condition may include a condition that the vehicle 1 is traveling with the main clutch 21 in the disengaged state. In this case, the CPU 30a may determine based on the information received from the clutch sensor and the vehicle speed sensor whether or not the condition that the vehicle 1 is traveling with the main clutch 21 in the disengaged state is satisfied.

When the CPU 30a determines that the combustion required condition is satisfied (Yes in Step S1; 11 in FIG. 4), the CPU 30a starts the clutch control before the combustion start of the engine 2 (Step S2). The clutch control is control of increasing the rotational frequency of the crankshaft 2d of the engine 2 by rotational force of the transmission shaft (in the present embodiment, the input shaft 5) driven by the electric motor 3. To be specific, in the clutch control, the CPU 30a controls the clutch actuator 22 such that the main clutch 21 changes from the disengaged state to the engaged state. In the present embodiment, the clutch control is rotational frequency synchronization control in which the rotational frequency of the transmission shaft (in the present embodiment, the input shaft 5) by the rotation of the engine 2 is made to coincide with the rotational frequency of the transmission shaft by the rotation of the electric motor 3. In other words, the rotational frequency synchronization control is control in which the rotational frequency of the first rotating body 21a and the rotational frequency of the second rotating body 21b are made to coincide with each other.

In the present embodiment, as shown in FIG. 4, in the clutch control, the CPU 30a controls the clutch actuator 22 such that the engagement pressure of the main clutch 21 gradually increases with time. To be specific, as the engagement pressure of the main clutch 21 increases, the transmission torque that can be transmitted from the transmission shaft to the engine 2 increases. Thus, the transmission torque transmitted to the engine 2 through the main clutch 21 in the output torque of the electric motor 3 increases. When the transmission torque reaches predetermined torque, the crankshaft 2d of the engine 2 that is in a non-combustion state starts rotating, and the rotational frequency of the crankshaft 2d increases. For simplicity, FIG. 4 shows that the engine rotational frequency starts increasing at a start time tl of the clutch control. However, actually, the crankshaft 2d does not rotate until the transmission torque reaches the predetermined torque. Therefore, a little after a timing at which the clutch engagement pressure starts increasing, the engine rotational frequency starts increasing.

Thus, part of the output torque of the electric motor 3 is used as the torque that rotates the crankshaft 2d. The engine 2 in the non-combustion state receives the torque from the electric motor 3 to gently increase the rotational frequency due to inertial resistance, compressive resistance, rotational resistance, and the like.

At the time of the clutch control in the transition mode, the engine 2 is not combusting. However, in the second graph from the bottom in FIG. 4, the engine torque is shown by a negative value. This is because the engine 2 driven by a component other than the engine 2 itself during the clutch control becomes a load that uses the rotational torque of the transmission shaft (in the present embodiment, the input shaft 5).

In the clutch control, the CPU 30a controls the electric motor 3 such that the output torque of the electric motor 3 increases as the engagement pressure of the main clutch 21 increases. To be specific, the CPU 30a performs the control of increasing the engagement pressure of the main clutch 21 and the control of increasing the output torque of the electric motor 3 in parallel.

Specifically, during the clutch control, the CPU 30a corrects the motor required torque, i.e., the output torque of the electric motor 3 by adding load torque, which is transmitted from the electric motor 3 to the engine 2 in accordance with the engagement pressure of the main clutch 21, to the rider required torque More specifically, if the rider required torque is constant, and the output torque of the motor is constant, part of the output torque of the motor is used for the rotation of the crankshaft 2d in accordance with the increase in the engagement pressure of the main clutch 21, and the rotational frequency of the driving wheel 9 decreases. To prevent this, the engagement pressure of the main clutch 21 is increased with time, and the output torque of the motor is increased with time. Thus, even when the torque of the electric motor 3 is used in accordance with the engagement pressure of the main clutch 21, the rotational frequency of the driving wheel 9 is prevented from decreasing. To be specific, since the change in the rotational frequency of the driving wheel 9 is suppressed, influence on the traveling feeling is suppressed, and the engine rotational frequency can be increased to a predetermined rotational frequency at which the combustion of the engine 2 can be stably performed.

After the clutch control is started, the CPU 30a determines whether or not a predetermined combustion permission condition is satisfied (Step S3). The combustion permission condition is a condition regarding the permission of the combustion of the engine 2. The combustion permission condition is a condition for changing the combustion disabled state of the engine 2 to a combustion enabled state.

In the present embodiment, the combustion permission condition is a condition that the clutch control has been completed, in other words, a condition that the main clutch 21 has reached the engaged state. A method of determining whether or not the main clutch 21 has reached the engaged state is not especially limited. For example, when the CPU 30a determines based on signals received from the engine rotational frequency sensor 32 and the motor rotational frequency sensor 33 that a difference between a transmission shaft conversion value of the engine rotational frequency and a transmission shaft conversion value of the motor rotational frequency is a predetermined synchronization reference value or less, the CPU 30a may determine that the main clutch 21 has reached the engaged state. Or, when the CPU 30a determines that the engagement pressure of the main clutch 21 which is detected by the clutch sensor or the parameter value corresponding to this engagement pressure is a predetermined value or more, the CPU 30a may determine that the main clutch 21 has reached the engaged state. For example, when the clutch sensor is a current sensor that detects the value of a current supplied to the solenoid valve, and the CPU 30a determines based on the detected value of the current that the hydraulic pressure of the clutch 21 is engagement corresponding pressure or more, the CPU 30a may determine that the main clutch 21 has reached the engaged state.

In the clutch control, in accordance with a driving operation of the rider or the vehicle state, i.e., in accordance with the information received from the operation sensor 31 or the vehicle state sensor 34, the CPU 30a may change a period of time in which the main clutch 21 changes from the disengaged state to the engaged state.

For example, the CPU 30a may control the clutch actuator 22 such that as the temperature of operating oil of the clutch actuator 22 increases, the period of time in which the main clutch 21 changes from the disengaged state to the engaged state decreases. Specifically, the CPU 30a may control the clutch actuator 22 such that an increase rate of the hydraulic pressure corresponds to the oil temperature received from the oil temperature sensor that detects the oil temperature of the clutch actuator 22. In this case, the CPU 30a may control the clutch actuator 22 such that as the detected oil temperature increases, the increase rate of the hydraulic pressure increases.

For example, the CPU 30a may control the clutch actuator 22 such that as the accelerator operation amount or the time change of the accelerator operation amount increases, the period of time in which the main clutch 21 changes from the disengaged state to the engaged state decreases. Specifically, the CPU 30a may control the clutch actuator 22 such that the increase rate of the the hydraulic pressure corresponds to the accelerator operation amount received from the operation sensor 31. In this case, the CPU 30a may control the clutch actuator 22 such that as the accelerator operation amount or the time change of the accelerator operation amount increases, the increase rate of the hydraulic pressure increases.

When the CPU 30a determines that the predetermined combustion permission condition is not satisfied (No in Step S3), the CPU 30a maintains the combustion disabled state of the engine 2 (Step S6). The combustion disabled state of the engine 2 is a state where at least one of combustion disabled condition (a), (b), or (c) is satisfied.
(a) the throttle valve that adjusts the intake air amount of the cylinder of the engine 2 is in a closed state
(b) the ignition performed by the igniter 2b at the cylinder has been canceled
(c) the supply of the fuel to the cylinder by the fuel supplier 2c is in a stop state

In the present embodiment, since the combustion permission condition is a condition that the main clutch 21 has reached the engaged state, the CPU 30a controls at least one of the throttle equipment 2a, the igniter 2b, or the fuel supplier 2c such that at least one of the combustion disabled condition (a), (b), or (c) is maintained during the clutch control.

When the CPU 30a determines that the predetermined combustion permission condition is satisfied (Yes in Step S3; t2 in FIG. 4), i.e., when the main clutch 21 has reached the engaged state, the CPU 30a executes combustion start control of starting the combustion of the engine 2 (Step S4).

Specifically, in the combustion start control, the CPU 30a controls the engine 2 such that the state of the engine 2 is changed from the combustion disabled state to the combustion enabled state in which the combustion disabled conditions (a), (b), and (c) are not satisfied at all. For example, as shown in FIG. 3, when the throttle valve of the throttle equipment 2a is maintained in a closed state during the clutch control, the CPU 30a controls the throttle equipment 2a such that the throttle valve opens in Step S4. The lowermost graph in FIG. 4 shows an example in which: during the clutch control, the throttle opening degree is zero, i.e., the throttle valve is in a closed state; and the throttle valve opens after the clutch control.

The CPU 30a starts torque change control together with the start of the combustion start control (Step S5). In the torque change control, the CPU 30a controls the engine 2 such that the output torque of the engine 2 is increased (hereinafter may be referred to as "engine torque increasing control"), and controls the electric motor 3 such that the output torque of the electric motor 3 is reduced (hereinafter may be referred to as "motor torque reducing control"). More specifically, in the torque change control, the CPU 30a determines the engine required torque and the motor required torque in the HEV mode. The sum of the engine required torque and the motor required torque is the rider required torque. In other words, in the torque change control, the sum of the engine torque and the motor torque, each of which is torque calculated as a conversion value at the transmission shaft, is maintained at the rider required torque.

In the torque change control, the CPU 30a executes the engine torque increasing control and the motor torque reducing control in parallel. In the engine torque increasing control, the CPU 30a controls the engine 2 such that the output torque of the engine 2 is increased so as to approach the determined engine required torque. In the motor torque reducing control, the CPU 30a controls the electric motor 3 such that the output torque of the electric motor 3 is reduced so as to approach the determined motor required torque. In the motor torque reducing control, the CPU 30a reduces the output torque of the electric motor 3 in accordance with the increase in the output torque of the internal combustion engine 2 by the engine torque increasing control. A start timing of the motor torque reducing control is the same as the start of the combustion of the engine 2 in Step S4, i.e., the start timing of the motor torque reducing control is the same as a start timing of the combustion start control.

The second graph from the bottom in FIG. 4 shows the motor torque and the engine torque in the electric power generation traveling state in the HEV mode. Because of the electric power generation traveling state, the motor torque is shown as a negative value. However, the motor required torque in the HEV mode does not have to be a negative value and may be, for example, zero or a positive value. To be specific, even after the combustion of the engine 2, the torque generated by the electric motor 3 may be utilized for the rotation of the driving wheel 9.

When the output torque of the engine 2 and the output torque of the electric motor 3 respectively reach the engine required torque and the motor required torque in the HEV mode (t3 in FIG. 4), the CPU 30a terminates the transition mode and completes the transition to the HEV mode. The example of FIG. 4 shows that during the execution of the torque change control, each required torque changes linearly. However, each required torque may change non-linearly.

As described above, according to the present embodiment, in a state where the engine rotational frequency is adequately increased after the clutch control is started, the combustion of the internal combustion engine 2 is started. Thus, the combustion failure caused by the inadequate engine rotational frequency is prevented, and the combustion of the engine 2 can be stably executed at the time of the combustion start. As a result, variations in combustion timings can be prevented. Moreover, the torque fluctuation caused by the variations in the combustion timings can be prevented, and this can improve the traveling feeling.

Moreover, in the present embodiment, although the torque of the transmission shaft is used due to the engagement of the main clutch 21, such torque can be compensated by increasing the output torque of the electric motor 3. Thus, the change in the rotational force of the driving wheel 9 when the main clutch 21 changes from the disengaged state to the engaged state can be suppressed, in other words, the change in the driving power of the driving wheel 9 can be suppressed.

Moreover, in the present embodiment, in the combustion start control, since the output torque of the electric motor 3 is reduced as the output torque of the internal combustion engine 2 is increased, a rapid increase in the torque transmitted to the driving wheel 9 as a whole can be suppressed. This can further improve the traveling feeling.

Moreover, in the present embodiment, since the reduction in the output torque of the electric motor 3 is started at the time of the combustion start of the engine 2, an effect of reducing a vehicle body shock generated by the combustion start of the engine 2 can be improved.

### Other Embodiments

The present invention is not limited to the above-described embodiment, and modifications, additions, and eliminations may be made with respect to the configuration of the embodiment.

For example, the vehicle described in the above embodiment is a straddled vehicle, such as a motorcycle or an automatic three-wheeled vehicle. However, the vehicle does not have to be the straddled vehicle. The vehicle may be a four-wheeled vehicle or the like. The straddled vehicle is relatively lighter than the other vehicles, and the shock generated at the vehicle body easily influences the traveling feeling of the rider. Therefore, the straddled vehicle is suitable for the control that can prevent the torque fluctuation caused by the variations in the combustion timings.

For example, the vehicle described in the above embodiment is a hybrid vehicle including two traveling driving sources. However, the vehicle is not limited to this. For example, the vehicle may include only one traveling driving source or may include three or more traveling driving sources. For example, the vehicle may include only the internal combustion engine as the traveling driving source. When the vehicle is not a hybrid vehicle, the combustion required condition does not have to include the mode switching condition.

In the above embodiment, the crankshaft of the engine is rotated by the driving power of the electric motor. However, the crankshaft of the engine may be rotated by inertial force generated during the traveling of the vehicle. For example, a state where the vehicle is traveling with the main clutch in the disengaged state may be a state where the vehicle is traveling without the power from the traveling driving source. The engine may be started in a state where the vehicle is traveling by gravity that acts when the vehicle goes down a slope. The crankshaft of the engine may be rotated by the rotational force of the driving wheel and the rotational force of the input shaft which are generated when the vehicle is traveling on a downward slope without the power of the traveling driving source.

Moreover, in the above embodiment, the vehicle 1 does not include the starter motor or the ISG. However, the vehicle may include the starter motor for the engine start or the ISG for the engine start. In this case, the rotational frequency synchronization control may be executed by the starter motor or the ISG. The motor torque reducing control may be control of reducing the torque of the starter motor or the torque of the ISG. To be specific, the electric motor that can transmit the power to the internal combustion engine may be a traction motor as the traveling driving source or may be the starter motor or the ISG.

The input shaft of the transmission is described as the transmission shaft which is located at the power transmitting path so as to exist between the second rotating body and the driving wheel and is connected to the electric motor without through the main clutch. However, the transmission shaft may be the output shaft of the transmission. Moreover, the vehicle does not have to include the transmission. In this case, the transmission shaft to which the output torque of the electric motor is transmitted may be located at the power transmitting path so as to exist between the second rotating body and the driving wheel.

The combustion permission condition may be a condition other than the condition that the main clutch 21 has reached the engaged state. To be specific, the combustion permission condition may be satisfied before the main clutch becomes the engaged state. The combustion permission condition may be a condition based on which it can be directly or indirectly determined that the engine rotational frequency has been adequately increased such that the combustion of the engine can be stably executed. For example, the combustion permission condition may include a condition that the engine rotational frequency is not less than a predetermined start rotational frequency at which the combustion of the engine can be stably executed. For example, the combustion permission condition may include a condition that a predetermined period of time has elapsed since the start of the clutch control. For example, the combustion permission condition may include a condition that the engagement pressure of the main clutch or the parameter value (such as the hydraulic pressure of the clutch actuator) corresponding to this engagement pressure becomes a predetermined value or more. For example, the combustion permission condition may include a condition that the hydraulic pressure of the clutch actuator is predetermined pressure or more.

The vehicle may include a user interface that receives a selection of the rider who selects a mode in which the vehicle body shock is acceptable or a mode in which the vehicle body shock is not acceptable. A driving operation may include a mode selecting operation with respect to the user interface. Moreover, the driving operation may include an acceleration operation, a deceleration operation, a constant speed traveling operation, a braking operation, a speed change operation, a turning operation, a lighting operation, and/or the like.

In the above embodiment, the hydraulic actuator is described as the clutch actuator. However, the clutch actuator is not limited to this. The clutch actuator may be another type of actuator, such as an electric motor.

When the clutch actuator 22 is the hydraulic actuator, the clutch sensor may be a hydraulic sensor that detects hydraulic pressure or may be a current sensor that detects the value of a current flowing through a solenoid of the solenoid valve that controls the hydraulic pressure. For example, the clutch sensor may be a displacement sensor that detects the displacement of one of a pair of rotating bodies relative to the other.

The transmission 4 selects the gear stage in mechanical association with the speed change operation of the rider. However, the transmission 4 may select the gear stage in electrical association with the speed change operation of the rider.

After the torque change control is executed, and the combustion of the engine is started, the output torque of the engine is increased, and the output torque of the electric motor is reduced. However, the above embodiment is not limited to this. For example, the torque transmitted to the driving wheel may be reduced by increasing the output torque of the engine and generating by the electric motor the braking torque that brakes the driving wheel. The electric motor that reduces the torque may be the traction motor as the traveling driving source or may be an electric motor for acceleration assist, electric power generation, or regeneration. Moreover, the electric motor may reduce the torque to be transmitted to the driving wheel and may be connected to the power transmitting path other than the input shaft of the transmission. For example, the electric motor may be directly connected to the crankshaft or may be connected to the output shaft of the transmission.

The increase in the torque of the driving wheel due to the combustion of the engine may be reduced by using a torque reducer other than the electric motor. Specifically, the increase in the torque of the driving wheel may be suppressed by using the torque reducer, such as braking equipment that brakes the driving wheel, the main clutch, or an electric power generator. To be specific, at the same time as the start of the combustion start control, the processing circuitry may execute, by using the torque reducer, the reduction in the torque to be transmitted to the driving wheel.

The time change of the engagement pressure of the main clutch in the clutch control may be changeable. The time change of the engagement pressure of the main clutch may be changed in accordance with whether or not the rider can accept the vehicle body shock. For example, the processing circuitry may determine based on the information received from the operation sensor 31 or the vehicle state sensor 34 whether or not the rider can accept the vehicle body shock. The processing circuitry may control the clutch actuator such that the time change of the clutch engagement pressure when it is determined that the rider can accept the vehicle body shock becomes larger than the time change of the clutch engagement pressure when it is determined that the rider cannot accept the vehicle body shock.

In the torque change control, the time change of the motor torque and the time change of the engine torque may be changeable. The time change of the motor torque and the time change of the engine torque may be changed in accordance with whether or not the rider can accept the vehicle body shock. For example, the processing circuitry may determine based on the information received from the operation sensor 31 or the vehicle state sensor 34 whether or not the rider can accept the vehicle body shock. The processing circuitry may control the electric motor such that the time change of the motor torque when it is determined that the rider can accept the vehicle body shock becomes larger than the time change of the motor torque when it is determined that the rider cannot accept the vehicle body shock. The processing circuitry may control the engine such that the time change of the engine torque when it is determined that the rider can accept the vehicle body shock becomes larger than the time change of the engine torque when it is determined that the rider cannot accept the vehicle body shock.

When the processing circuitry determines based on the information received from the operation sensor that the rider has performed an accelerator operation, a speed change operation, or a boost operation, the processing circuitry may determine that the rider can accept the vehicle body shock. When the mode switching condition is satisfied since the mode switching operation of the rider is detected by the mode switching operation sensor, the processing circuitry may determine that the rider can accept the vehicle body shock.

When the processing circuitry determines based on the information received from the vehicle state sensor that the vehicle is in a lean state or a steering state, the processing circuitry may determine that the rider cannot accept the vehicle body shock.

When the mode switching condition is satisfied without the mode switching operation of the rider, the processing circuitry may determine that the rider cannot accept the vehicle body shock.

In the above embodiment, the throttle equipment 2a is controlled such that the throttle valve opens in Step S4. However, it is preferable that while the engine 2 is in the combustion disabled state, the combustion disabled condition (a) be not satisfied. In other words, it is preferable that while the engine 2 is in the combustion disabled state, the combustion disabled condition (b), the combustion disabled condition (c), or both of the combustion disabled conditions (b) and (c) be satisfied. To be specific, for example, it is preferable that in a state where the throttle valve is fully open in the combustion start control, ignition inhibition in the engine, fuel supply stop in the engine, or both of the ignition inhibition and the fuel supply stop be executed. Thus, restriction by the throttle valve is suppressed, and intake resistance is reduced. Therefore, the crankshaft is easily rotated in the combustion disabled state.

Even after the combustion of the engine is started, the clutch may be disengaged, and the traveling of the vehicle in the EV mode may be continued while maintaining the engine combustion state.

In the above embodiment, the steps shown in FIG. 3 are executed by the processing circuitry. However, at least one of the steps shown in FIG. 3 may be executed by the operation of the rider.

The foregoing has described the embodiment as an example of the technology disclosed in the present application. However, the technology in the present invention is not limited to this and is applicable to embodiments in which modifications, replacements, additions, omissions, and the like have been suitably made. Moreover, a new embodiment may be prepared by combining the components described in the above embodiment. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems. Two blocks shown in order in each flowchart may be executed at the same time or in reverse order depending on the situation.

The functionality of the elements disclosed herein may be implemented using circuitry or processing circuitry which includes general purpose processors, special purpose processors, integrated circuits, ASICs ("Application Specific Integrated Circuits"), conventional circuitry or any combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware or processor.

### Disclosed Aspects

The following aspects disclose preferred embodiments.

### First Aspect

A vehicle including:
an internal combustion engine that is a traveling driving source;
a driving wheel;
a main clutch that includes a first rotating body and a second rotating body and is switchable between an engaged state and a disengaged state, the first rotating body being located at a power transmitting path, which extends between the internal combustion engine and the driving wheel, so as to be closer to the internal combustion engine, the second rotating body being located at the power transmitting path so as to be closer to the driving wheel;
a clutch actuator that operates the main clutch; and
processing circuitry configured to
   in a state where the vehicle is traveling with the main clutch in the disengaged state, determine whether or not a predetermined combustion required condition is satisfied, the predetermined combustion required condition being a condition regarding a requirement of a start of combustion of the internal combustion engine,
   when the processing circuitry determines that the combustion required condition is satisfied, execute clutch control of controlling the clutch actuator such that the main clutch changes from the disengaged state to the engaged state,
   after the clutch control is started, determine whether or not a predetermined combustion permission condition is satisfied, the predetermined combustion permission condition being a condition regarding permission of the combustion of the internal combustion engine, and
   when the processing circuitry determines that the combustion permission condition is satisfied, execute combustion start control of starting the combustion of the internal combustion engine.

According to the above configuration, after the clutch control is started, and the processing circuitry determines that the combustion permission condition is satisfied, the processing circuitry executes the combustion start control. Therefore, the combustion of the internal combustion engine can be started in a state where the engine rotational frequency is adequately increased. Thus, the combustion failure caused by the inadequate engine rotational frequency is prevented, and the combustion of the engine can be stably executed at the time of the combustion start. As a result, the variations in the combustion timings can be prevented. Moreover, the torque fluctuation caused by the variations in the combustion timings can be prevented, and this can improve the traveling feeling.

### Second Aspect

The vehicle according to the first aspect, further including an electric motor that transmits power to the driving wheel, wherein
after the combustion start control, the processing circuitry controls the internal combustion engine such that output torque of the internal combustion engine is increased, and controls the electric motor such that output torque of the electric motor is reduced.

According to the above configuration, since the output torque of the electric motor is reduced as the output torque of the internal combustion engine is increased, a rapid increase in the torque transmitted to the driving wheel as a whole can be suppressed. This can further improve the traveling feeling.

### Third Aspect

The vehicle according to the second aspect, wherein:
the electric motor is another traveling driving source different from the internal combustion engine in the vehicle;
the vehicle further includes a transmission shaft which is located at the power transmitting path so as to exist between the second rotating body and the driving wheel and to which the output torque of the electric motor is transmitted, wherein
in the clutch control, the processing circuitry controls the electric motor such that the output torque of the electric motor increases as engagement pressure of the main clutch increases.

According to the above configuration, although the torque of the transmission shaft is used due to the engagement of the main clutch, such torque can be compensated by increasing the output torque of the electric motor. Thus, the change in the rotational force of the driving wheel when the main clutch changes from the disengaged state to the engaged state can be suppressed, in other words, the change in the driving power of the driving wheel can be suppressed.

### Fourth Aspect

The vehicle according to the second or third aspect, wherein at the same time as the start of the combustion of the internal combustion engine by the combustion start control, the processing circuitry starts reducing the output torque of the electric motor.

According to the above configuration, since the reduction in the output torque of the electric motor is started at the time of the combustion start of the engine, the effect of reducing the vehicle body shock generated by the combustion start of the engine can be improved.

### Fifth Aspect

The vehicle according to any one of the first to fourth aspects, wherein:
in at least a period of time from a timing at which the clutch control starts to a timing at which the processing circuitry determines that the combustion permission condition is satisfied, the processing circuitry controls the internal combustion engine such that the internal combustion engine maintains a combustion disabled state in which at least one of a first combustion disabled condition, a second combustion disabled condition, or a third combustion disabled condition is satisfied, the first combustion disabled condition being a condition that a throttle valve that adjusts an intake air amount of a cylinder of the internal combustion engine is in a closed state, the second combustion disabled condition being a condition that ignition performed by an igniter of the internal combustion engine at the cylinder has been canceled, the third combustion disabled condition being a condition that supply of fuel to the cylinder of the internal combustion engine is in a stop state; and
when the processing circuitry determines that the combustion permission condition is satisfied, the processing circuitry starts the combustion of the internal combustion engine in the combustion start control by changing the internal combustion engine from the combustion disabled state to a combustion enabled state in which the first, second, and third combustion disabled conditions are not satisfied at all.

According to the above configuration, the combustion of the internal combustion engine before the combustion permission condition is satisfied can be prevented.

### Sixth Aspect

The vehicle according to any one of the first to fifth aspects, wherein in accordance with a driving operation of a rider or a vehicle state, the processing circuitry changes a period of time in which the main clutch changes from the disengaged state to the engaged state in the clutch control.

According to the above configuration, the period of time in which the main clutch changes from the disengaged state to the engaged state in the clutch control is changed in accordance with the driving operation of the rider or the vehicle state. Therefore, for example, the shock generated at the vehicle body due to the increase in the engagement pressure of the clutch can be adjusted depending on the situation. For example, the vehicle can be controlled in light of the degree of acceptance of the vehicle body shock which corresponds to the rider's intention regarding the acceleration. For example, when the accelerator operation amount or the time change of the accelerator operation amount is large, some shock generated at the vehicle body is accepted, and the period of time in which the main clutch changes from the disengaged state to the engaged state can be reduced.

### Seventh Aspect

The vehicle according to any one of the first to sixth aspects, wherein the processing circuitry changes the combustion permission condition in accordance with a driving operation of a rider or a vehicle state.

According to the above configuration, since the combustion permission condition is changed in accordance with the driving operation of the rider or the vehicle state, the timing of the combustion of the engine can be adjusted depending on the situation. For example, when the rider can accept some variations in the combustion timings of the engine according to the driving operation of the rider or the vehicle state, the combustion start control can be performed in a state where the rotational frequency of the engine is relatively low.

### Eighth Aspect

The vehicle according to any one of the second to seventh aspects, wherein in the control of increasing the output torque of the internal combustion engine, the processing circuitry changes an increase rate of the output torque of the internal combustion engine in accordance with a driving operation of a rider or a vehicle state.

According to the above configuration, the increase rate of the output torque of the internal combustion engine is changed in accordance with the driving operation of the rider or the vehicle state. Therefore, for example, the shock generated at the vehicle body due to the increase in the increase rate of the output torque of the internal combustion engine can be adjusted depending on the situation. For example, the vehicle can be controlled in light of the degree of acceptance of the vehicle body shock which corresponds to the rider's intention regarding the acceleration. For example, when the accelerator operation amount or the time change of the accelerator operation amount is large, some shock generated at the vehicle body is accepted, and the increase rate of the output torque of the internal combustion engine can be increased.

### Ninth Aspect

The vehicle according to any one of the first to eighth aspects, wherein the vehicle includes a straddled vehicle.

According to the above configuration, the straddled vehicle is relatively lighter than the other vehicles, and the shock generated at the vehicle body easily influences the traveling feeling of the rider. Therefore, the straddled vehicle is suitable for the control that can prevent the torque fluctuation caused by the variations in the combustion timings.

### Tenth Aspect

A method of controlling a vehicle,
the vehicle including:
an internal combustion engine that is a traveling driving source;
a driving wheel;
a main clutch that includes a first rotating body and a second rotating body and is switchable between an engaged state and a disengaged state, the first rotating body being located at a power transmitting path, which extends between the internal combustion engine and the driving wheel, so as to be closer to the internal combustion engine, the second rotating body being located at the power transmitting path so as to be closer to the driving wheel; and
a torque reducer that reduces torque to be transmitted to the driving wheel,
the method including:
   in a state where the vehicle is traveling with the main clutch in the disengaged state, determining whether or not a predetermined combustion required condition is satisfied, the predetermined combustion required condition being a condition regarding a requirement of a start of combustion of the internal combustion engine;
   when it is determined that the combustion required condition is satisfied, changing the main clutch from the disengaged state to the engaged state;
   after the main clutch starts changing from the disengaged state to the engaged state, determining whether or not a predetermined combustion permission condition is satisfied, the predetermined combustion permission condition being a condition regarding permission of the combustion of the internal combustion engine; and
   when it is determined that the combustion permission condition is satisfied, starting the combustion of the internal combustion engine and controlling the torque reducer such that the torque to be transmitted to the driving wheel is reduced.

According to the above method, after the main clutch starts changing from the disengaged state to the engaged state, and it is determined that the combustion permission condition is satisfied, the combustion of the engine is started. Therefore, the combustion of the internal combustion engine can be started in a state where the engine rotational frequency is adequately increased. Thus, the combustion failure caused by the inadequate engine rotational frequency is prevented, and the combustion of the engine can be stably executed at the time of the combustion start. As a result, the variations in the combustion timings can be prevented. Moreover, the torque fluctuation caused by the variations in the combustion timings can be prevented, and this can improve the traveling feeling. Furthermore, the combustion of the internal combustion engine is started, and the torque to be transmitted to the driving wheel is reduced by controlling the torque reducer. Therefore, the rapid increase in the torque to be transmitted to the driving wheel as a whole can be suppressed. This can further improve the traveling feeling.

A vehicle control program that makes at least one processor execute the above method.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention as defined by the appended claims.

## Claims

1. A vehicle (1) comprising:
an internal combustion engine (2) that is a traveling driving source;
a driving wheel (9);
a main clutch (21) that includes a first rotating body (21a) and a second rotating body (21b) and is switchable between an engaged state and a disengaged state, the first rotating body (21a) being located at a power transmitting path, which extends between the internal combustion engine (2) and the driving wheel (9), so as to be closer to the internal combustion engine (2), the second rotating body (21b) being located at the power transmitting path so as to be closer to the driving wheel (9);
a clutch actuator (22) that operates the main clutch (21); and
processing circuitry configured to
in a state where the vehicle (1) is traveling with the main clutch (21) in the disengaged state, determine whether or not a predetermined combustion required condition is satisfied, the predetermined combustion required condition being a condition regarding a requirement of a start of combustion of the internal combustion engine (2),
when the processing circuitry determines that the combustion required condition is satisfied, execute clutch control of controlling the clutch actuator (22) such that the main clutch (21) changes from the disengaged state to the engaged state,
after the clutch control is started, determine whether or not a predetermined combustion permission condition is satisfied, the predetermined combustion permission condition being a condition regarding permission of the combustion of the internal combustion engine (2), and
when the processing circuitry determines that the combustion permission condition is satisfied, execute combustion start control of starting the combustion of the internal combustion engine (2).

2. The vehicle (1) according to claim 1, further comprising an electric motor (3) that transmits power to the driving wheel (9), wherein
after the combustion start control, the processing circuitry controls the internal combustion engine (2) such that output torque of the internal combustion engine (2) is increased, and controls the electric motor (3) such that output torque of the electric motor (3) is reduced.

3. The vehicle (1) according to claim 2, wherein:
the electric motor (3) is another traveling driving source different from the internal combustion engine (2) in the vehicle (1);
the vehicle (1) further comprises a transmission shaft which is located at the power transmitting path so as to exist between the second rotating body (21b) and the driving wheel (9) and to which the output torque of the electric motor (3) is transmitted, wherein
in the clutch control, the processing circuitry controls the electric motor (3) such that the output torque of the electric motor (3) increases as engagement pressure of the main clutch (21) increases.

4. The vehicle (1) according to claim 2 or 3, wherein at the same time as the start of the combustion of the internal combustion engine (2) by the combustion start control, the processing circuitry starts reducing the output torque of the electric motor (3).

5. The vehicle (1) according to any one of claims 1 to 4, wherein:
in at least a period of time from a timing at which the clutch control starts to a timing at which the processing circuitry determines that the combustion permission condition is satisfied, the processing circuitry controls the internal combustion engine (2) such that the internal combustion engine (2) maintains a combustion disabled state in which at least one of a first combustion disabled condition, a second combustion disabled condition, or a third combustion disabled condition is satisfied, the first combustion disabled condition being a condition that a throttle valve that adjusts an intake air amount of a cylinder of the internal combustion engine (2) is in a closed state, the second combustion disabled condition being a condition that ignition performed by an igniter (2b) of the internal combustion engine (2) at the cylinder has been canceled, the third combustion disabled condition being a condition that supply of fuel to the cylinder of the internal combustion engine (2) is in a stop state; and
when the processing circuitry determines that the combustion permission condition is satisfied, the processing circuitry starts the combustion of the internal combustion engine (2) in the combustion start control by changing the internal combustion engine (2) from the combustion disabled state to a combustion enabled state in which the first, second, and third combustion disabled conditions are not satisfied at all.

6. The vehicle (1) according to any one of claims 1 to 5, wherein in accordance with a driving operation of a rider or a vehicle state, the processing circuitry changes a period of time in which the main clutch (21) changes from the disengaged state to the engaged state in the clutch control.

7. The vehicle (1) according to any one of claims 1 to 6, wherein the processing circuitry changes the combustion permission condition in accordance with a driving operation of a rider or a vehicle state.

8. The vehicle (1) according to any one of claims 2 to 7, wherein in the control of increasing the output torque of the internal combustion engine (2), the processing circuitry changes an increase rate of the output torque of the internal combustion engine (2) in accordance with a driving operation of a rider or a vehicle state.

9. The vehicle (1) according to any one of claims 1 to 8, wherein the vehicle (1) includes a straddled vehicle (1).

10. A method of controlling a vehicle (1),
the vehicle (1) including:
an internal combustion engine (2) that is a traveling driving source;
a driving wheel (9);
a main clutch (21) that includes a first rotating body (21a) and a second rotating body (21b) and is switchable between an engaged state and a disengaged state, the first rotating body (21a) being located at a power transmitting path, which extends between the internal combustion engine (2) and the driving wheel (9), so as to be closer to the internal combustion engine (2), the second rotating body (21b) being located at the power transmitting path so as to be closer to the driving wheel (9); and
a torque reducer that reduces torque to be transmitted to the driving wheel (9),
the method comprising:
in a state where the vehicle (1) is traveling with the main clutch (21) in the disengaged state, determining whether or not a predetermined combustion required condition is satisfied, the predetermined combustion required condition being a condition regarding a requirement of a start of combustion of the internal combustion engine (2);
when it is determined that the combustion required condition is satisfied, changing the main clutch (21) from the disengaged state to the engaged state;
after the main clutch (21) starts changing from the disengaged state to the engaged state, determining whether or not a predetermined combustion permission condition is satisfied, the predetermined combustion permission condition being a condition regarding permission of the combustion of the internal combustion engine (2); and
when it is determined that the combustion permission condition is satisfied, starting the combustion of the internal combustion engine (2) and controlling the torque reducer such that the torque to be transmitted to the driving wheel (9) is reduced.
